Europäisches Patentamt

European Patent Office

Office européen des brevets

(19)

(11) Numéro de publication : **0 451 076 A1**

(12) # DEMANDE DE BREVET EUROPEEN

(21) Numéro de dépôt : **91460015.0**

(22) Date de dépôt : **20.03.91**

(51) Int. Cl.⁵ : **A01K 13/00, A22B 5/00, A22B 5/08, C14B 1/00, C14C 15/00**

(30) Priorité : **21.03.90 FR 9003788**

(43) Date de publication de la demande :
**09.10.91 Bulletin 91/41**

(84) Etats contractants désignés :
**BE DE DK ES FR GB IT NL SE**

(71) Demandeur : **SOCIETE VITREENNE D'ABATTAGE**
**20, boulevard de Laval**
**F-35500 Vitre (FR)**

(72) Inventeur : **Aubert, Georges**
**Mas d'Armor**
**F-13360 Roquevaire (FR)**

(74) Mandataire : **Le Faou, Daniel et al**
**Cabinet Regimbeau 11, rue Franz Heller,**
**Centre d'Affaires Patton B.P. 19107**
**F-35019 Rennes Cédex (FR)**

(54) **Procédé et installation de traitement de la peau d'un animal de boucherie en cours d'abattage.**

(57)    L'invention concerne un procédé et une installation de traitement de la peau d'un animal de boucherie (A) en cours d'abattage.
   Selon le procédé :
   a) avant abattage, on soumet la peau (C), au moins dans la région ventrale (V), à un premier nettoyage, en faisant passer l'animal (A) dans un bain d'eau (10) ;
   b) après abattage et dépouillage, on soumet la peau (C) à un second nettoyage, celui-ci comprenant le passage de la peau - coté poils - sur un treillis (21), et l'exposition de celle-ci à l'action d'au moins un batteur rotatif (3) disposé sur le côté opposé du treillis (21).
   c) on sale et on plie la peau (C).

EP 0 451 076 A1

FIG_1

## PROCEDE ET INSTALLATION DE TRAITEMENT DE LA PEAU D'UN ANIMAL DE BOUCHERIE EN COURS D'ABATTAGE

La présente invention concerne un procédé ainsi qu'une installation de traitement de la peau d'un animal de boucherie en cours d'abattage. Ceux-ci sont particulièrement adaptés, mais non exclusivement, au traitement de la peau des bovins.

Par l'expression "traitement de la peau", on entend les opérations qui consistent à la nettoyer, la saler et la plier en vue de son expédition ultérieure à une tannerie.

Dans les abattoirs où ont lieu actuellement ces opérations, celles-ci sont encore effectuées manuellement.

Lorsqu'ils arrivent à l'abattoir, les animaux présentent une peau le plus souvent chargée de salissures. On entend par le terme "salissures", des excréments, de la boue, ou encore des débris de végétaux. Le poids de ces salissures peut aller jusqu'à huit à dix kilos par animal, lorsqu'il s'agit de bovins. La majorité de ces salissures se trouve au niveau des pattes et de la région ventrale de l'animal.

A l'heure actuelle, le nettoyage de la peau de l'animal, préalablement à son abattage, est inexistant. Or, lorsque l'on dépouille l'animal, on opère une découpe de la peau au niveau de la région ventrale, qui est la plus souillée. Le plus souvent, la chair découverte lors de cette opération est polluée par les salissures. Il faut donc la nettoyer ou la jeter.

Lorsque l'animal est dépouillé, on procède, le plus souvent manuellement, à un nettoyage grossier de la peau avant de procéder à son salage.

Cette opération, mise en oeuvre à l'aide de sel marin, permet la conservation des peaux tout en évitant leur dégradation de sorte que, ultérieurement, les peaux seront acheminées à la tannerie en parfait état de conservation. Il s'agit là encore d'une opération le plus souvent manuelle, qui consiste à étendre une peau sur le sol et à répandre sur celle-ci, par exemple à l'aide d'une pelle, une certaine quantité de sel.

De plus, on notera que lorsque le salage de la peau est effectué, on élimine manuellement l'excédent de sel se trouvant sur celle-ci. Du fait que les peaux n'ont pas été parfaitement nettoyées, le sel éliminé se trouve rapidement pollué et n'est donc pas utilisable pour le traitement d'une peau supplémentaire.

Enfin, pour améliorer encore l'état de conservation des peaux, on procède à leur pliage de sorte que le sel diffuse facilement à l'intérieur de toute la peau.

Ces opérations sont donc fastidieuses, fatigantes, consommatrices de temps et entraînent le gaspillage d'une quantité importante de sel.

La présente invention a pour principal but de rendre plus rationnel le traitement des peaux d'animaux de boucherie en cours d'abattage. Ce but est atteint selon l'invention grâce au fait que l'on propose un procédé qui permet de mécaniser les différentes opérations de traitement, ce procédé comprenant un nettoyage de la peau avant et après l'abattage. Ce procédé est économique, facile à mettre en oeuvre et permet de traiter rapidement un nombre élevé de peaux.

Il s'agit d'un procédé selon lequel :

a) avant abattage, on soumet la peau de l'animal, au moins dans la région ventrale, à un premier nettoyage en faisant passer l'animal dans un bain d'eau ;

b) après abattage et dépouillage, on soumet la peau à un second nettoyage, celui-ci comprenant le passage de la peau - côté poils - sur un treillis et l'exposition de celle-ci à l'action d'au moins un batteur rotatif disposé sur le côté opposé du treillis ;

c) on sale et on plie la peau.

Selon d'autres caractéristiques avantageuses mais non limitatives de l'invention :

– lors du passage de l'animal dans le bain d'eau, on soumet celui-ci à l'action d'une source ultrasonore immergée ;

– au cours de l'étape a), on projette sur un écran visible par l'animal, une image animée représentant par exemple, un ou plusieurs animaux de la même espèce que lui, par exemple un troupeau en marche ;

– immédiatement après l'étape b) et alors que la peau est toujours sur le treillis, on soumet la peau à un second nettoyage ;

– le second nettoyage est réalisé au moyen d'au moins un batteur rotatif.

La présente invention concerne également une installation pour la mise en oeuvre de ce procédé. Cette installation comporte un poste de lavage qui comprend une baignoire apte à être déplacée verticalement et qui est surmontée par une plaque ajourée sur laquelle l'animal prend place à l'étape a), cette plaque présentant, vue de dessus, un encombrement légèrement inférieur à celui du fond de la baignoire.

Selon d'autres caractéristiques avantageuses:

– la plaque ajourée est disposée sur le parcours des animaux vers la salle d'abattage, la baignoire étant encastrée dans le sol en période de non-utilisation ;

– la baignoire est solidaire d'une série de vérins adaptée pour la déplacer verticalement de sorte que les parois verticales de celle-ci entourent ladite plaque ;

– l'installation comprend, pour la mise en oeuvre de l'étape b) un treillis qui est bordé de moyens de fixation des peaux, ceux-ci étant mobiles le long du treillis ;

– l'installation comprend au moins un batteur rotatif de forme sensiblement cylindrique et d'axe de rotation sensiblement parallèle au treillis, le batteur comprenant une série de fers plats radiaux et longitudinaux aptes à venir en contact avec les poils desdites peaux ;

– l'installation comprend au moins un batteur rotatif de forme sensiblement cylindrique et d'axe de rotation sensiblement parallèle au treillis, ce batteur comprenant une série de câbles rectilignes périphériques tendus entre les extrémités dudit batteur et parallèles à son axe de rotation ;

– la vitesse de rotation du batteur muni de fers plats est inférieure à celle du batteur muni de câbles ;

– l'installation comprend un dispositif mobile adapté pour être déplacé au-dessus des peaux disposées à plat sur un support, ce dispositif comprenant un réservoir de stockage et de distribution de sel sur les peaux ;

– le réservoir a la forme d'une trémie dont l'orifice inférieur est équipé d'un cylindre rotatif rainuré, cette trémie comprenant des moyens adaptés pour la rendre mobile verticalement ;

– l'installation comprend un poste de pliage des peaux qui comporte au moins une paire de disques rotatifs d'axe horizontal sur chacun desquels est articulée une bielle guidée le long d'un rail sensiblement horizontal, l'extrémité libre de la bielle présentant un orifice pour le passage du câble d'un treuil associé, ce câble comportant une pince pour la saisie des peaux, le poste de pliage comprenant également des moyens d'actionnement des disques et des treuils, adaptés pour permettre le pliage des peaux ;

– l'installation comprend un poste de pliage des peaux qui comporte au moins une paire de vérins d'axe sensiblement horizontal, associée à au moins une paire de treuils dont le câble est guidé à l'extrémité du vérin associé, l'extrémité libre du câble comportant une pince pour la saisie des peaux ;

– le poste de pliage comporte en outre des moyens de pesage des peaux.

D'autres caractéristiques et avantages de la présente invention apparaîtront à la lecture de la description et des dessins annexés qui en présentent un mode de réalisation préférentiel.

Sur ces dessins:

– la figure 1 est une vue de côté schématique du poste de lavage de la peau de l'animal avant abattage, certains éléments étant représentés en coupe ;

– la figure 2 est une vue de dessous schématique du poste de lavage de la peau de l'animal après abattage et dépouillage ;

– la figure 3 est une vue de côté schématique en coupe de deux batteurs rotatifs du poste de nettoyage de la figure 2 ;

– la figure 4 est une vue schématique de côté en coupe, d'un autre batteur de nettoyage de la peau après dépouillage ;

– la figure 5 est une vue schématique de côté du poste de salage des peaux ;

– la figure 6 est une vue schématique de côté du poste de pliage des peaux après salage ;

– les figures 7A, 7B, 7C, 7D sont des schémas destinés à montrer comment s'opère ce pliage ;

– la figure 8 est une vue schématique de côté d'une variante de réalisation du poste de pliage.

L'installation pour la mise en oeuvre du procédé de traitement de la peau des animaux de boucherie comprend essentiellement un premier poste de lavage, un second poste de lavage, un poste de salage des peaux, ainsi qu'un poste de pliage des peaux salées.

Nous décrirons ci-après, les uns après les autres, ces différents postes.

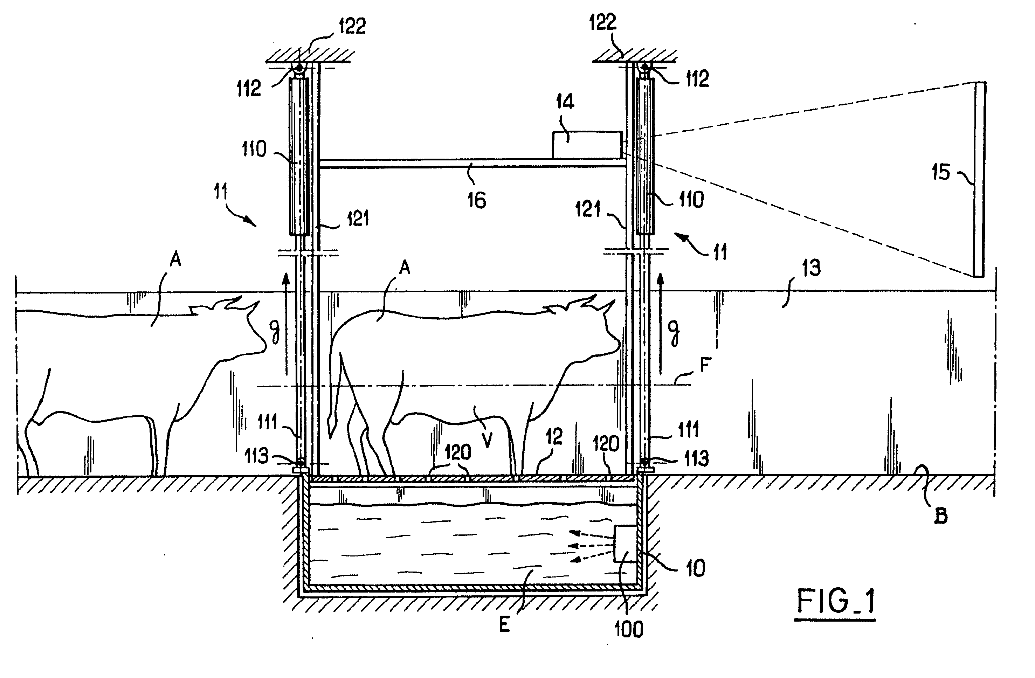

Le premier poste de lavage, représenté schématiquement à la figure 1, comprend un couloir d'acheminement des animaux A vers la salle d'abattage. Ce couloir est délimité d'une part par le sol B et d'autre part par deux palissades parallèles 13 dont une seule est visible sur cette figure.

A un endroit particulier de ce couloir, le sol présente une cavité de forme sensiblement parallèlépipèdique dans laquelle est encastrée une baignoire 10 de forme complémentaire.

Dans la position représentée à la figure 1, la baignoire 10 est recouverte d'une plaque 12 comportant des lumières 120. Cette plaque 12 est maintenue en place par une série de quatre supports 121 solidaires d'éléments fixes du poste de lavage, par exemple des éléments de charpente 122. Ainsi, comme représenté à la figure 1, la plaque 12 constitue un élément formant partie intégrante du sol B sur lequel se déplacent les animaux.

Les dimensions de la plaque 12 sont telles qu'elle est entourée par les parois verticales de la baignoire.

A chaque coin de cette baignoire est articulée, autour d'un axe 113, la tige 111 d'un vérin vertical 11. Le corps de celui-ci est articulé, autour d'un axe 112, sur un élément de charpente 122.

On comprend aisément que la rétraction des tiges 111 des vérins dans le sens de la flèche g provoque la remontée de la baignoire 10 dans le même sens.

La baignoire 10 est remplie d'eau E et est équipée d'un générateur d'ultrasons immergé 100. Dans une variante de réalisation, ce générateur peut être remplacé par des moyens mécaniques d'agitation de l'eau.

Ce poste comporte également un projecteur de films 14 en place sur un support 16, ainsi qu'un écran 15 disposé à une certaine distance du projecteur 14.

On comprendra, lorsque l'on décrira ci-après la mise en oeuvre du procédé, la fonction de ces différents éléments.

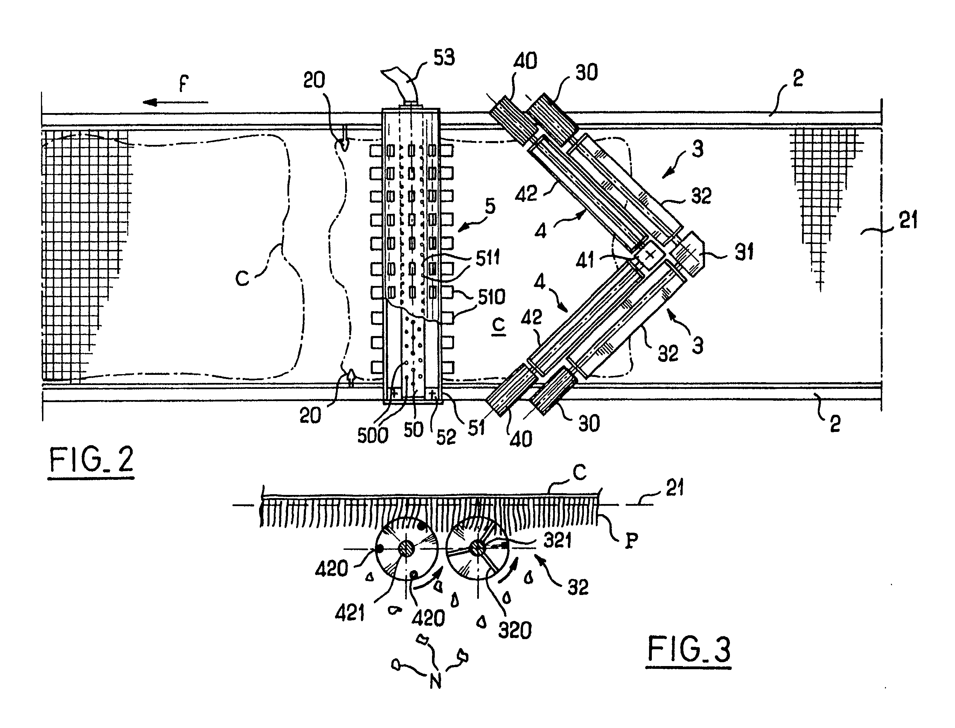

Le deuxième poste de l'installation, représenté schématiquement à la figure 2, est destiné au nettoyage et au lavage des peaux après abattage et dépouillage des animaux.

Ce poste comprend un treillis 21 sensiblement horizontal bordé par deux rails parallèles 2, à l'intérieur desquels coulissent, à l'aide de moyens moteurs non représentés, des pinces 20 de fixation des peaux C. Les peaux sont mises en place de sorte que les poils de l'animal soient du côté du treillis.

La vitesse d'avancement des pinces 20 est choisie en fonction de l'état des peaux ; elle est lente si les peaux sont très sales. On a repéré par la flèche f leur direction d'avancement.

Les moyens de nettoyage des peaux comprennent deux paires de batteurs rotatifs 3 et 4. Chaque paire de batteurs est disposée de façon à former une sorte de "V" dont la pointe est dirigée à l'opposé du sens d'avancement des peaux.

Chaque batteur 3 comporte un moto-réducteur 30 pour la mise en rotation d'un arbre 321 guidé à son extrémité opposée à l'intérieur d'une boîte 31 commune aux deux batteurs. Sur l'axe 321 sont fixés trois fers plats 320 radiaux et angulairement équidistants les uns des autres.

Les batteurs rotatifs 4 présentent la même structure générale que les batteurs 3 à savoir un moto-réducteur 40 permettant la mise en rotation d'un axe 421 guidé à son extrémité libre dans une boîte 41. Parallèlement à l'axe 421 sont disposés trois câbles périphériques 420 tendus entre des disques parallèles disposés perpendiculairement et fixés à l'axe 421. On notera que, de préférence, les sens de rotation des batteurs 3 et 4 sont identiques et que la vitesse de rotation des batteurs 3 est nettement inférieure à celle des batteurs 4.

Avantageusement, les câbles 420 seront choisis très fins mais résistants ; ils sont par exemple réalisés en acier.

En aval de ces éléments, c'est-à-dire plus à gauche quand on considère la figure 2, est disposée, perpendiculairement aux rails 2, un batteur rotatif 5. Celui-ci comprend un premier tube cylindrique fixe 50 alimenté en eau par une canalisation 53 et dont la paroi présente une série de trous 500.

Ce batteur comprend également un second tube cylindrique 51 de plus grand diamètre mais de même axe que le tube 50. Entre ceux-ci est montée une paire de roulement à billes 52 permettant la mise en rotation du tube 51 à l'aide de moyens moteurs non représentés. La paroi du tube 51 est pourvue d'une série de trous 511 qui alternent avec des séries d'ailettes radiales 510. Ces ailettes sont de préférence réalisées en matière plastique déformable.

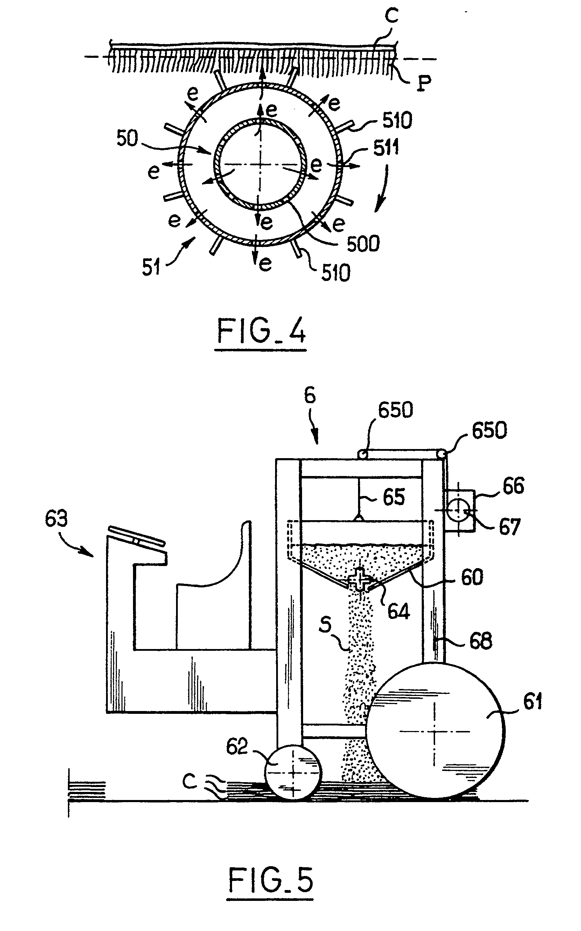

Le troisième poste de l'installation de traitement des peaux consiste en un dispositif de salage 6 représenté schématiquement à la figure 5. Il s'agit d'un dispositif auto-moteur qui comprend un châssis 68 ainsi que des roues 61 et 62. Ce dispositif comporte également un poste de conduite référencé 63. Le châssis de ce dispositif est équipé d'une trémie 60 contenant du sel S. L'orifice inférieur de cette trémie est équipé d'un arbre 64 qui comporte des rainures longitudinales, cet arbre étant mu en rotation à l'aide de moyens moteurs de type connu et non représentés. De préférence, ces rainures ont une section en forme de V.

La trémie est rendue mobile verticalement grâce à un système de câbles 65, tendus sur des poulies de renvoi 650 associés à une poulie 67 et à un moteur 66.

Le quatrième poste de traitement des peaux permet de plier celles-ci.

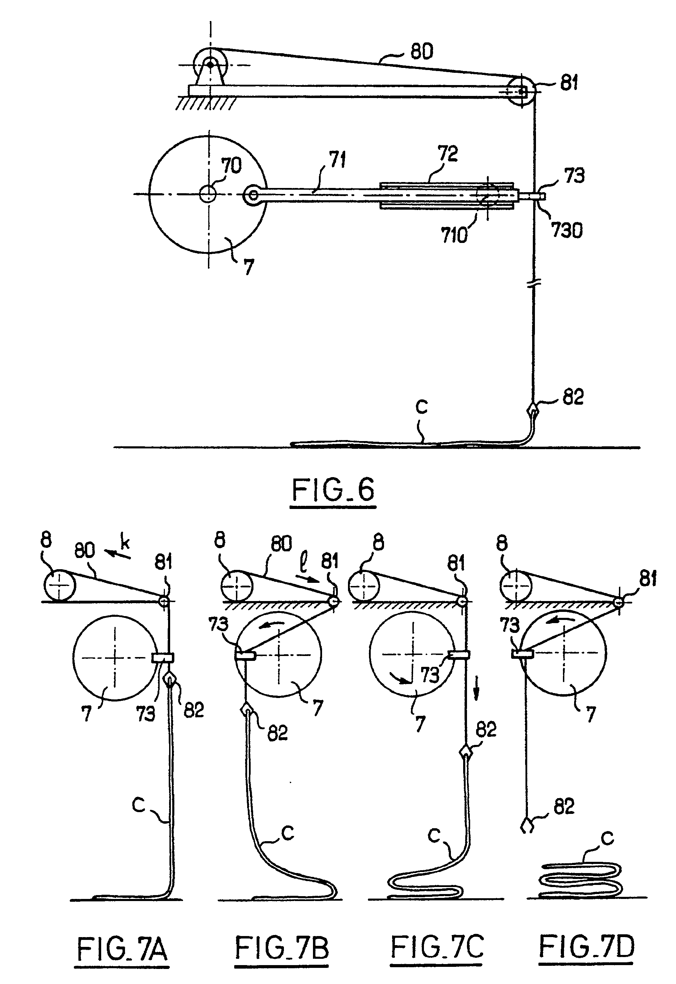

On a représenté schématiquement à la figure 6 les éléments essentiels de ce poste.

Les éléments décrits ci-dessous, bien que mentionnés comme étant uniques, sont en fait prévus par paire et disposés parallèlement les uns aux autres.

Ce poste comprend un disque rotatif vertical 7 calé sur un arbre horizontal 70, associé à des moyens moteurs non représentés. Sur ce disque 7 est articulée une bielle 71 qui présente, non loin de son extrémité libre un galet 710 fou en rotation, logé à l'intérieur d'un rail 72 sensiblement horizontal. L'extrémité libre 73 de cette bielle comporte une lumière 730.

Ce poste comprend également un treuil 8 équipé de moyens moteurs non représentés. A ce treuil est associée une poulie de renvoie 81 qui se trouve sensiblement à l'aplomb de l'extrémité 73 de la bielle. Sur cette poulie est tendu le câble 80 du treuil, ce dernier passant à travers la lumière 730 de la bielle 71. L'extrémité libre du câble porte une pince 82 pour l'accrochage d'une peau C.

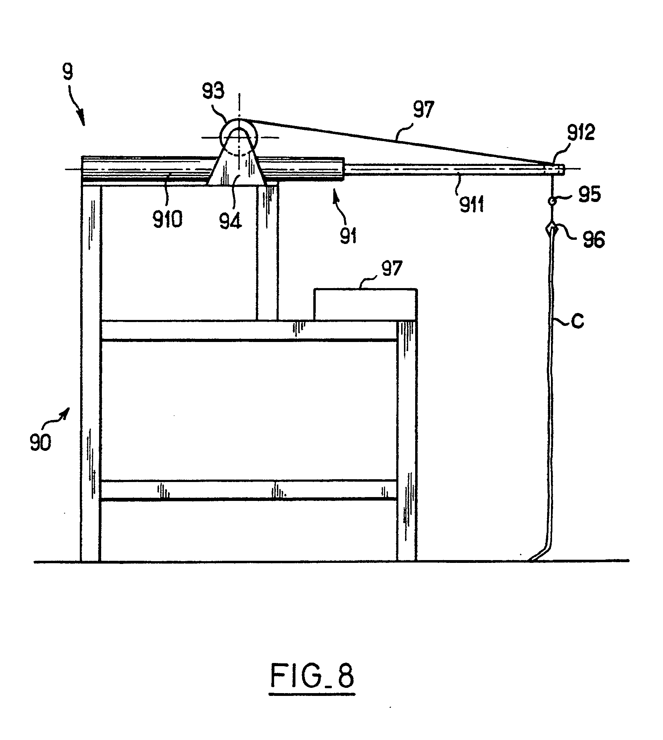

Dans une variante de réalisation représentée à la figure 8, le poste comprend un vérin 91 dont le corps 910, qui est monté sur un bâti, s'étend sensiblement horizontalement. L'extrémité libre de la tige 911 de ce vérin comporte une lumière 912 pour le passage d'un câble 97 formant partie d'un treuil 93 monté sur un étrier 94. L'extrémité libre du câble 97 porte une tige horizontale 95 à laquelle est fixée une pince 96 d'accrochage d'une peau C. Enfin, le châssis de ce poste porte des moyens de pesage 97 de la peau.

Les dispositifs décrit aux figures 6 et 8 peuvent être montés sur un bâti mobile. Dans cette dernière hypothèse, il peut être prévu des moyens automoteurs pour le déplacer.

Nous allons maintenant décrire la façon dont est mis en oeuvre le procédé de l'invention, à l'aide des différents postes décrits ci-dessus.

Les animaux A, destinés à être abattus, sont amenés dans le couloir délimité par le sol B et les palissades 13 représentés à la figure 1. On diffuse alors sur l'écran 15 une image animée qui représente, de préférence, des animaux de même espèce, par exemple marchant à la queue leu leu. Le demandeur a constaté que cette opération a pour effet de calmer les animaux qui, bien entendu, se trouvent dans un environnement non familier.

Alors qu'un animal A se trouve sur la plaque 12, on actionne l'ensemble des vérins 11 de façon à provoquer la remontée de la baignoire 10.

En fin de course, l'eau E contenue dans la baignoire arrive par exemple au niveau de la ligne F tracée en traits mixtes à la figure 1, c'est-à-dire au-delà de la région ventrale de l'animal.

Les ondes ultrasonores provenant du générateur 100 contribuent au décollement rapide d'une grande partie des salissures qui tapissent le ventre et les pattes de l'animal. Ces salissures tombent par gravité au fond de la baignoire. La gamme de fréquences des ondes utilisées est avantageusement de 10 à 100 kHz.

Le nombre et la dimension des lumières 120, ainsi que la vitesse de montée de la baignoire à l'aide des vérins 11 sont choisis de telle façon que le ventre de l'animal soit immergé dans l'eau pendant seulement quelques secondes, afin de ne pas faire augmenter inutilement le stress de l'animal. A titre indicatif, la durée de ce bain peut aller jusqu'à une minute.

Lorsque la baignoire est revenue à sa position initiale représentée à la figure 1, on fait avancer l'animal A de façon à ce qu'il libère la place. On procède de la même façon pour chaque animal.

Suite à cette opération, on procéde, comme cela est bien connu, à l'abattage et au dépouillage de l'animal. Du fait que la peau de l'animal, dans région ventrale, est relativement propre, l'incision qui y est faite, lors du dépouillage, est facilitée et ne provoque pas la pollution de la chair découverte à cet endroit.

Lorsque l'animal est complètement dépouillé, on met en place la peau C sur le treillis 21 (représenté à la figure 2) de sorte que les poils touchent ce treillis. Du fait du déplacement des peaux le long du treillis, il s'opère un raclage des poils, ce qui provoque l'enlèvement d'une partie des salissures. Ce premier nettoyage est complété par les batteurs rotatifs 3, 4 et 5.

Ainsi, les fers plats 321 des batteurs 3 provoquent, par leur mouvement de rotation, le fractionnement et le détachement d'une partie des salissures N restantes.

Cette opération est complétée par le travail des batteurs 4 dont les câbles 420, animés d'un mouvement de rotation rapide, détachent le reste des salissures N sans que celles-ci y restent collées. La vitesse de rotation élevée des câbles, par exemple de l'ordre de 1 400 tours par minute, contribue très nettement à l'enlèvement des salissures restantes.

Le batteur 5 complète encore ce nettoyage.

De l'eau, sous une pression d'environ 6 bars, est amenée à l'intérieur du tube 50 par l'intermédiaire de la canalisation 53.

L'eau provenant du tube 50 traverse les ouvertures 500 dans le sens des flèches e et est projetée vers l'extérieur du tube 51 par les ouvertures 511. Du fait du mouvement rotatif du cylindre 51, les poils P de la peau C sont humectés puis raclés par les ailettes 510.

La combinaison de deux nettoyages, l'un avant abattage de l'animal et l'autre après dépouillage, permet d'obtenir une peau pratiquement exempte de salissures. Le nettoyage de la partie ventrale de l'animal permet non seulement d'obtenir une incision propre au moment du dépouillage, mais également, préalablement au second nettoyage, une peau dont les parties latérales (qui correspondent à la partie ventrale incisée) sont propres. Or, il s'est avéré à l'usage, que le nettoyage effectué à l'aide des batteurs 3, 4 et 5 n'est véritablement performant que dans la partie centrale de la peau. Ces deux nettoyages ont donc des fonctions parfaitement complémentaires.

Pour effectuer le salage, on pose les peaux au sol, disposées en lignes et on déplace le dispositif 6 représenté à la figure 5, au-dessus de celles-ci. On règle la hauteur de la trémie 60 de façon que celle-ci se trouve à proximité des peaux et, tout en faisant avancer le dispositif, on met en route les moyens d'actionnement de l'arbre rainuré 64, de sorte que du sel S s'écoule sur la face supérieure des peaux. On renouvelle l'opération en posant sur les peaux déjà salées, de nouvelles peaux. Cette opération peut être renouvelée jusqu'à l'obtention de piles formées, par exemple, de quinze à vingt peaux.

Au bout d'un délai d'environ huit jours, ce qui permet au sel de bien diffuser à l'intérieur des peaux, on procède à leur pliage.

Les schémas des figures 7A à 7D permettent de comprendre les différentes opérations de pliage, à l'aide du dispositif représenté à la figure 6. Sur ces figures on a seulement représenté le disque 7, l'extrémité 73 de la bielle 71 ainsi que le treuil 8 et le câble associé.

Dans une première étape on actionne le treuil 8 de manière à amener la pince 82 à proximité du sol. On met en place la pince 82 de manière à saisir la peau C et on provoque la remontée du câble 80 dans le sens de la flèche k. Dans une seconde étape, on provoque la rotation d'un demi-tour du disque 7 tout en déroulant le câble 80 dans le sens de la flèche l. On arrive ainsi à former un premier pli de la peau C, tel que cela est représenté à la figure 7B. Dans une troisième étape on provoque à nouveau la rotation du disque 7 d'un demi-tour tout en déroulant le câble 8 et on obtient ainsi un nouveau pli. Enfin, on renouvelle l'opération de la figure 7B jusqu'à l'obtention d'un nouveau pli. Lorsque ceci est obtenu, on peut décrocher la pince 82 de la peau. Jusqu'au départ des peaux pour la tannerie où elles seront traitées jusqu'à l'obtention de cuir, les peaux repliées se conservent parfaitement, le sel continuant à diffuser à l'intérieur de celles-ci.

Le dispositif représenté à la figure 8 permet d'obtenir le même pliage mais cette fois ci à l'aide du vérin 91, la rotation du disque 7 étant remplacée par des mouvements d'extension et de rétraction de la tige 911 du vérin 91. Bien entendu, il est possible de ne plier les peaux qu'en double, poils contre poils, comme cela est requis par certaines tanneries.

## Revendications

1. Procédé de traitement de la peau (C) d'un animal de boucherie (A) en cours d'abattage selon lequel :

   a) avant abattage, on soumet la peau (C) au moins dans la région ventrale (V), à un premier nettoyage en faisant passer l'animal dans un bain d'eau ;

   b) après abattage et dépouillage, on soumet la peau (C) à un second nettoyage, celui-ci comprenant le passage de la peau - coté poils - sur un treillis (21) et l'exposition de celle-ci à l'action d'au moins un batteur rotatif (3, 4) disposé sur le côté opposé du treillis ;

   c) on sale et on plie la peau.

2. Procédé selon la revendication 1, caractérisé en ce que lors du passage de l'animal dans le bain d'eau, on soumet celui-ci à une source ultrasonore immergée (100).

3. Procédé selon l'une des revendications 1 et 2, caractérisé en ce que au cours de l'étape a), on projette sur un écran (15) visible par l'animal (A), une image animée représentant un ou plusieurs animaux de la même espèce que lui.

4. Procédé selon l'une des revendications 1 à 3, caractérisé en ce que immédiatement après l'étape b) et alors que la peau (C) est toujours sur le treillis, on soumet la peau (C) à un second nettoyage.

5. Procédé selon la revendication 4, caractérisé en ce que le second nettoyage est réalisé au moyen d'au moins un batteur rotatif (5).

6. Installation pour la mise en oeuvre du procédé selon l'une des revendications 1 à 5, caractérisée en ce qu'elle comprend une baignoire (10) apte à être déplacée verticalement, laquelle est surmontée par une plaque ajourée (12) sur laquelle l'animal prend place à l'étape a) et qui présente, vue de dessus, un encombrement légèrement inférieur à celui du fond de la baignoire (10).

7. Installation selon la revendication 6, caractérisée en ce que la plaque ajourée (12) est disposée sur le parcours des animaux (A) vers la salle d'abattage, la baignoire (12) étant encastrée dans le sol (B) en période de non-utilisation.

8. Installation selon l'une des revendications 6 et 7, caractérisée en ce que ladite baignoire (10) est solidaire d'une série de vérins (11) adaptée pour la déplacer verticalement de sorte que les parois verticales de celle-ci entourent ladite plaque (12).

9. Installation selon l'une des revendications 6 à 8, caractérisée en ce qu'elle comprend, pour la mise en oeuvre de l'étape b), un treillis (21) lequel est bordé de moyens de fixation (20) des peaux, ceux-ci étant mobiles le long du treillis.

10. Installation selon la revendication 9, caractérisée en ce qu'elle comprend au moins un batteur rotatif (3) de forme sensiblement cylindrique et d'axe de rotation sensiblement parallèle audit treillis (21), le batteur comprenant une série de fers plats (320) radiaux et longitudinaux aptes à venir en contact avec les poils (P) desdites peaux (C).

11. Installation selon l'une des revendications 9 et 10, caractérisée en ce qu'elle comprend au moins un batteur rotatif (4) de forme sensiblement cylindrique et d'axe de rotation sensiblement parallèle audit treillis (21), celui-ci comprenant une série de câbles (420) rectilignes et périphériques, tendus entre les deux extrémités dudit batteur et parallèles à son axe de rotation.

12. Installation selon les revendications 10 et 11 prises en combinaison, caractérisée en ce que la vitesse de rotation du batteur (3) munis de fers plats (320) est inférieure à celle du batteur (4) munis de câbles (420).

13. Installation selon l'une des revendications 6 à 12, caractérisée en ce qu'elle comprend un dispositif mobile (6) adapté pour être déplacé au-dessus des peaux (C) disposées sensiblement horizontalement sur un support, ce dispositif comprenant un réservoir de stockage et de distribution de sel (60) sur les peaux.

14. Installation selon la revendication 13, caractérisée en ce que le réservoir (60) a la forme d'une trémie dont l'orifice inférieur est équipé d'un cylindre rotatif rainuré (64) et en ce qu'il comprend des moyens (65, 66, 67, 650) adaptés pour le rendre mobile verticalement.

15. Installation selon l'une des revendications 6 à 14, caractérisée en ce qu'elle comprend un poste de pliage des peaux (C) qui comporte au moins une paire de disques (7) d'axe de rotation horizontal sur chacun desquels est articulée une bielle (71) guidée le long d'un rail (72) sensiblement horizontal, l'extrémité libre de la bielle présentant un orifice (730) pour le passage du câble (80) d'un treuil (8) associé, ce câble comportant une pince (82) pour la saisie des peaux (C) et en ce que le poste de pliage comporte en outre des moyens d'actionnement des disques (7) et des treuils (8), adaptés pour permettre le pliage des peaux.

16. Installation selon l'une des revendications 6 à 14, caractérisée en ce qu'elle comprend un poste de pliage des peaux qui comporte au moins une paire de vérins (91) d'axe sensiblement horizontal, associés à au moins une paire de treuils (93) dont le câble (97) est guidé à l'extrémité du vérin (91) associé, l'extrémité libre du câble comportant une pince (96) pour la saisie des peaux (C).

17. Installation selon l'une des revendications 15 et 16, caractérisée en ce que ledit poste comporte en outre des moyens de pesage (97) des peaux (C).

FIG_1

EP 0 451 076 A1

FIG. 2

FIG. 3

EP 0 451 076 A1

## FIG_4

## FIG_5

FIG. 6

FIG. 7A    FIG. 7B    FIG. 7C    FIG. 7D

FIG_8

Office européen
des brevets

**RAPPORT DE RECHERCHE EUROPEENNE**

Numero de la demande

EP 91 46 0015

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.5 ) |
| A | US-A-4 236 489 (CARRA)<br>* abrégé; figures 1-4 * | 1,6-8 | A01K13/00<br>A22B5/00<br>A22B5/08 |
| A | GB-A-2 181 041 (MASAO KANAZAWA)<br>* page 2, ligne 14 - ligne 79; figure 1 * | 2 | C14B1/00<br>C14C15/00 |
| A | GB-A-675 237 (ZAPF)<br>* revendication 1 * | 2 | |
| A | DE-A-2 753 614 (GIMELFARB)<br><br>* revendications 1,5; figures 1,4,9 * | 1,4,5,<br>9-12 | |
| A | DE-A-3 209 059 (ENGLEDER)<br>* page 9, ligne 9 - page 10, ligne 4; figures 1-7 * | 1,13,14 | |
| A | DE-C-187 153 (MASCHINENFABRIK MOENUS A.-G.)<br>* le document en entier * | 1,15 | |
| A | US-A-4 660 506 (NALVEN) | | DOMAINES TECHNIQUES RECHERCHES (Int. Cl.5 ) |
| A | US-A-3 116 515 (WILCOX) | | A01K |
| A | FR-A-2 297 794 (GAUTHIER) | | A22B<br>C14B |
| A | FR-A-2 384 025 (ARENCO-BMD MASCHINENFABRIK G.M.B.H.) | | C14C<br>D06G |

Le présent rapport a été établi pour toutes les revendications

| Lieu de la recherche | Date d'achèvement de la recherche | Examinateur |
|---|---|---|
| LA HAYE | 01 JUILLET 1991 | VON ARX V.U. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)